# EUROPEAN PATENT SPECIFICATION

(11) **EP 3 077 175 B1**
(45) Date of publication and mention of the grant of the patent: **22.02.2023**
(21) Application number: 14868247.9
(22) Date of filing: 03.12.2014
(51) Int. Cl.: B29C 45/77, B29C 45/78, B29C 70/48

(54) **RESIN TRANSFER MOLDING WITH RAPID CYCLE TIME**
HARZTRANSFERFORMUNG MIT SCHNELLER ZYKLUSZEIT
MOULAGE PAR TRANSFERT DE RÉSINE AVEC TEMPS DE CYCLE RAPIDE

(30) Priority: 03.12.2013 US 201361910974 P
(43) Date of publication of application: 12.10.2016
(73) Proprietor: Continental Structural Plastics, Inc., Auburn Hills, MI 48326 (US)
(72) Inventor: GUHA, Probir Kumar, Bloomfield Hills, Michigan 48031 (US); SIWAJEK, Michael J., Auburn Hills, Michigan 48326 (US)
(74) Representative: Matkowska, Franck
(86) International application number: PCT/US2014/068326
(87) International publication number: WO 2015/084933

(56) References cited:
- EP-A1- 1 157 810
- EP-A1- 1 721 719
- JP-A- 2011 168 010
- US-A- 5 518 388
- US-A1- 2003 122 285
- US-A1- 2003 122 285
- US-A1- 2003 227 107
- US-A1- 2007 182 071
- US-A1- 2011 046 771

## Description

### RELATED APPLICATIONS

### FIELD OF THE INVENTION

The present invention in general relates to resin transfer molding and in particular to an improved resin transfer molding process and to a system with a staggered injection of resin by time and position in a multipoint injection system.

### BACKGROUND OF THE INVENTION

Resin transfer molding (RTM) is a method of fabricating composite structures with high strength, complex geometries, tight dimensional tolerances, and part quality typically required for automotive and aerospace applications. RTM uses a closed mold commonly made of aluminum with a fiber "lay-up" such as graphite placed into the mold. The mold is closed, sealed, heated, and placed under vacuum. A room temperature (20°C) or heated resin is then injected into the mold to impregnate the fiber layup. Having the mold heated and under vacuum assists the resin flow. The mold is then held at a temperature sufficient to cure the resin. Typically, a resin experiences three distinct states during the RTM process; a viscous state during injection, a jelling state during which the viscosity of the resin changes to a higher viscosity, and a cure time when the resin materials chemically crosslink and the resin hardens. Molds used for RTM have one or more injection ports for introducing the resin, and at least one exhaust port for gas and excess resin to leave the mold. Multiport injection molds are typically used for larger parts that have an increased processing time.

EP 1 721 719 discloses a process for resin transfer molding (RTM) with staggered injection of a resin having the characteristics defined in the preamble of claim 1 and a resin transfer molding system having the characteristics defined in the preamble of claim 9.

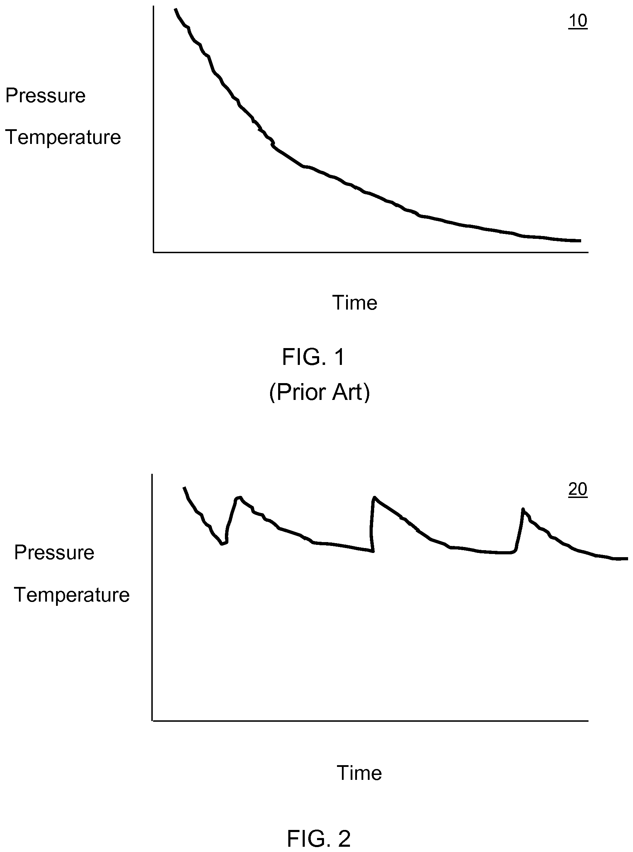

A common problem encountered during the RTM process is a non-uniform flow of the resin, where the resin experiences a change in viscosity as the resin travels away from the injection point. Furthermore, as shown in the graph of FIG. 1 as the time of processing progresses the pressure and temperature experienced by the resin decreases as a function of time. The aforementioned problems experienced during the RTM process contribute to defects in formed parts.

Thus, there exists a need for an improved RTM multiport injection process that minimizes both production defects and cycle time.

### SUMMARY OF THE INVENTION

A process for resin transfer molding (RTM) with staggered injection of a resin is provided that injects resin into a plurality of injection ports of a mold. Said process is defined in claim 1. The temperature and pressure applied to the mold are controlled during injection to limit promote rapid filling of the mold cavity. Fibers are readily added within the resin. Cycle times of from 1 to 5 minutes are provided for the process. A resin transfer molding (RTM) system for performing this process and defined in claim 9 is also provided.

### BRIEF DESCRIPTION OF THE DRAWINGS

FIG. 1 is a graph showing the typical response curve as the time of processing progresses the pressure and temperature experienced by the resin decreases as a function of time; a
FIG. 2 is a graph showing the response curve of pressure and temperature as a function of time for resin with staggered injection in a multiport RTM mold according to an embodiment of the invention;
FIG. 3 is a plan view of a multiport RTM mold with four injection ports for staggered resin injection according to embodiments of the invention;
FIG. 4 is a plan view of a multiport RTM mold with six injection ports for staggered resin injection; and
FIG. 5 is a flowchart of a production process of the staggered multiport RTM process according to an embodiment of the invention.

### DETAILED DESCRIPTION OF THE INVENTION

The present invention has utility as an improved resin transfer molding (RTM) process with a staggered injection of resin by time and position in a multipoint injection system. The staggered introduction of resin in a mold provides for an improved pressure and temperature profile versus time for the resin used for forming parts versus existing RTM processes that simultaneously inject resin. The staggered introduction of resin in embodiments of the inventive process provide for improved product yields with fewer formed part defects resulting from non-impregnated portions, thereby improving the quality of the molded product. Furthermore, product cycle time is also reduced by staggering the injection of resin in a multiport mold versus the existing process of simultaneous injection of resin in a multiport mold. It has been observed that cycle time for forming parts have been reduced from approximately 10-60 minutes to three to five minutes with the inventive process of staggering the injection of resin in a multiport mold.

Resins used in embodiments of the inventive staggered RTM process include thermosetting resins such as epoxy; urethanes; polyesters, and vinylesters; that are low in viscosity and easy to be impregnated into reinforcing fibers. These resins illustratively include epoxy resin, an unsaturated polyester resin, a polyvinylester resin, a phenolic resin, a guanamine resin, a polyimide resin such as bismaleimide triazine resin, a furan resin, a polyurethane resin, a polydiarylphthalate resin, a melamine resin, a urea resin, an amino resin, etc. Fibers are introduced to the resin used to strengthen formed parts including glass, carbon, and other synthetic fibers, as well as natural fibers. Natural fibers may include coconut fibers, bamboo fibers, sugar cane fibers, banana skin fibers, etc.

Referring now to FIG. 2, a graph 20 showing the response curve of pressure and temperature as a function of time for resin with staggered injection in a multiport RTM mold according to an embodiment of the inventive process. As can be seen as compared to the graph 10 of FIG. 1 for a simultaneous injected part, the rapid decline of pressure and temperature during the processing of a molded part in the mold is avoided compared to conventional RTM process, and the temperature and pressure is maintained during the RTM process of embodiments of the invention to increase cycle time of molding a part.

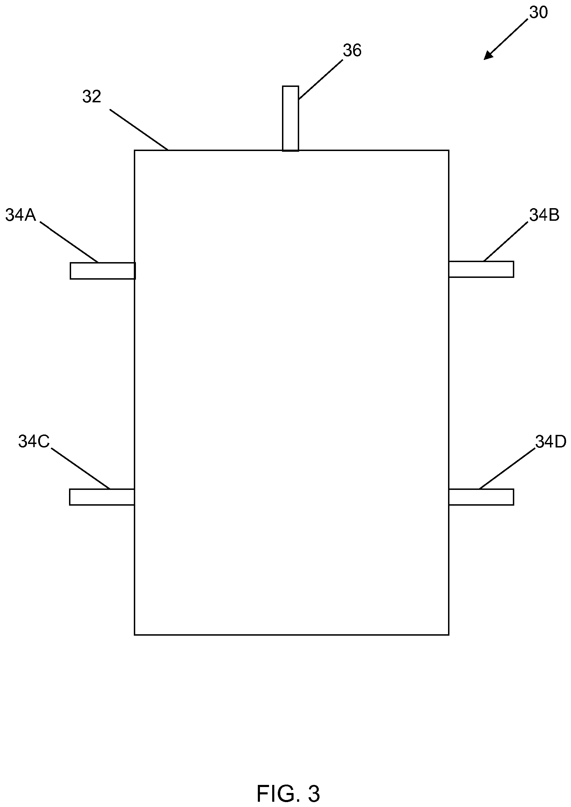

FIG. 3 is a plan view of a multiport RTM system 30 with a mold 32 with four injection ports 34A-34C for staggered resin injection and an exhaust port 36 according to embodiments of the invention. Injection ports 34A and 34B may be turned on as a pair and alternated with injection ports 34C and 34D as a second pair, where the adjacent pairings (34A-34B, 34C-34D) inject resin at alternating times. In another embodiment, cross-pairings of injection ports (34A-34D) and (34B-34C) may inject resin at alternating times. In certain embodiments not covered by the appended claims, the injection ports 34A, 34B, 34C, and 34D are each individually turned on and off in sequential clockwise or counter clockwise order. While four such ports 34A-34D are shown it is appreciated that the number of injection ports ranges from 1 to 10 in various inventive embodiments, while in other embodiments, from 2 to 6 ports and in still other embodiments 2 or 3 ports are used.

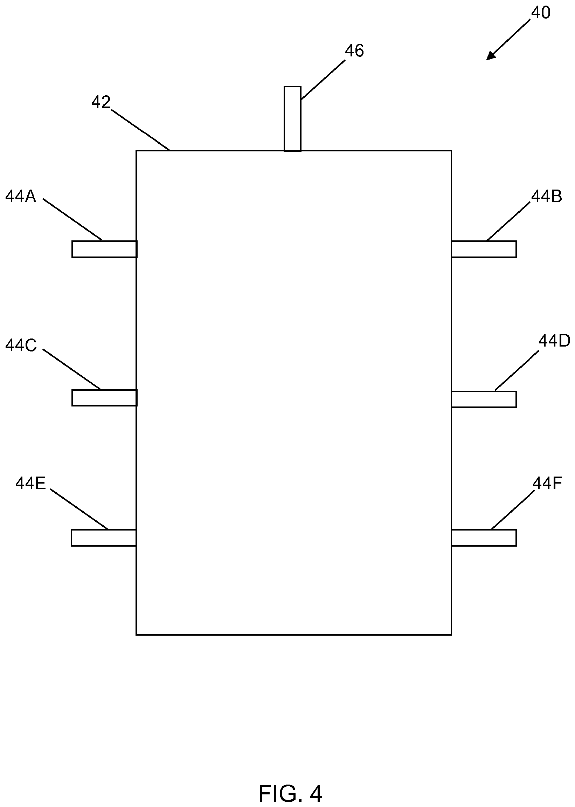

FIG. 4 is a plan view of a multiport RTM system 40 with a mold 42 with six injection ports 44A-44F for staggered resin injection and an exhaust port 46. As was discussed with respect to the inventive embodiment of FIG. 3, the injection ports 44A-44F may be activated in pairings. As should be apparent the number possible combinations and configurations for activating and injecting resin through the various injection ports increases as the number of available injection ports increases for a given mold.

According to the invention, the firing or activation order and patterns of usage of the resin injectors are preprogramed into a numerical controller or computing device with a processor and a storage medium for storing and executing the programs. In an embodiment of the inventive staggered RTM system, the numerical controller may also control a carousal with multiple injection mold fixtures that can be automatically loaded into position for the staggered multiport injection process, and then removed and another mold fixture can be moved into position while a formed part is removed from the first fixture.

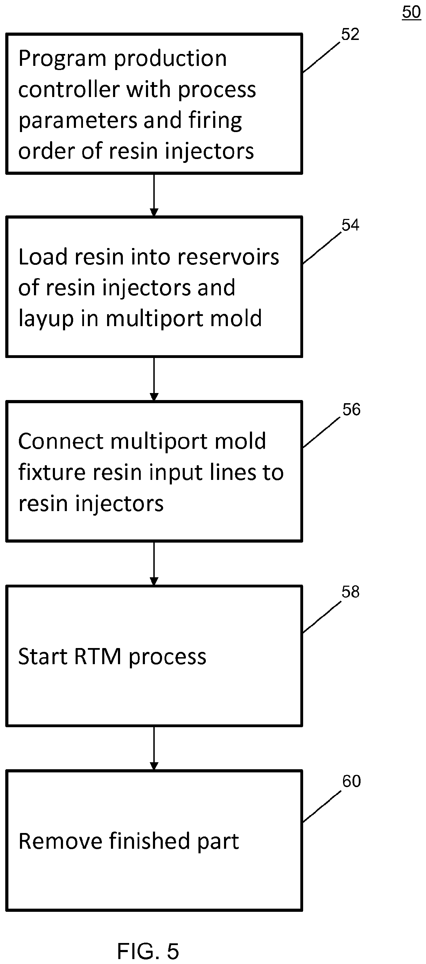

FIG. 5 is a flowchart of a production process 50 of the staggered multiport RTM process according to an embodiment of the invention. The process starts with an operator programing a production controller (step 52) with process parameters for a particular molded part to be formed with the RTM process using a multi resin injection port mold. Process parameters including pressure, temperature, and firing sequence of the resin injectors are set by the operator based on the resin material and part to be formed in the RTM process. The operator loads the resin for forming the part into the reservoirs of the resin injectors, as well as the layup into the mold (step 54). The multiport mold fixture resin input lines are hooked up to the resin injectors (step 56). The RTM process is started (step 58), and the completed part is removed from the mold (step 60).

## Claims

1. A process for resin transfer molding, RTM, with staggered injection of a resin,
the process comprising:
injecting said resin into a plurality of injection ports of a mold;
controlling the temperature and pressure applied to said mold; and
wherein said plurality of injection ports are activated for injecting said resin, **characterized in that** said resin comprises fibers and said injection ports are either turned on as:
(a) a first opposing pair (34A and 34B) and alternated with a second opposing pair (34C and 34D), where the adjacent opposing pairs (34A-34B and 34C-34D) inject resin at alternating times; or,
(b) a first crossing pair (34A-34D) and alternated with a second crossing pair (34B-34C), where the adjacent crossing pairs (34A-34D and 34B-34C) inject resin at alternating times.

2. The process of claim 1 wherein said resin is at least one of an epoxy resin, an unsaturated polyester resin, a polyvinylester resin, a phenolic resin, a guanamine resin, a polyimide resin, a bismaleimide triazine resin, a furan resin, a polyurethane resin, a polydiarylphthalate resin, a melamine resin, a urea resin, or an amino resin.

3. The process of claim 1 wherein said fibers are at least one of glass, carbon, or other synthetic fibers.

4. The process of claim 1 wherein said fibers are natural fibers.

5. The process of claim 4 wherein said natural fibers are at least one of coconut fibers, bamboo fibers, sugar cane fibers, or banana skin fibers.

6. The process of any of claims 1 to 5 wherein said plurality of injection ports are activated based on a computer program.

7. The process of any of claims 1 to 5 further comprising repeating the steps of the injecting and the controlling with a cycle time of 1 to 5 minutes.

8. The process of any of claims 1 to 5 wherein the controlling limits a decline of pressure and temperature during formation of a molded part in said mold.

9. A resin transfer molding, RTM, system comprising:
a mold having a cavity;
a plurality of injection ports each in fluid communication between the cavity and a reservoir of resin; **characterized in that** it comprises
a numerical controller that is preprogrammed for activating said plurality of injection ports for injecting resin from said reservoir into the cavity in such a way to perform the process of any one of claims 1 to 8.

## Patentansprüche

1. Verfahren zum Harztransferformen, RTM, mit gestaffelter Injektion eines Harzes, wobei das Verfahren umfasst:
Einspritzen des Harzes in eine Vielzahl von Einspritzöffnungen einer Form;
Steuerung der Temperatur und des Drucks, die auf die Form einwirken; und wobei die Vielzahl von Einspritzöffnungen zum Einspritzen des Harzes aktiviert werden, **dadurch gekennzeichnet, dass** das Harz Fasern enthält und die Einspritzöffnungen entweder eingeschaltet sind als:
(a) ein erstes gegenüberliegendes Paar (34A und 34B) und abwechselnd mit einem zweiten gegenüberliegenden Paar (34C und 34D), wobei die benachbarten gegenüberliegenden Paare (34A-34B und 34C-34D) Harz zu abwechselnden Zeiten einspritzen; oder
(b) ein erstes Kreuzungspaar (34A-34D) und abwechselnd ein zweites Kreuzungspaar (34B-34C), wobei die benachbarten Kreuzungspaare (34A-34D und 34B-34C) abwechselnd Harz einspritzen.

2. Verfahren nach Anspruch 1, wobei das Harz mindestens eines der folgenden ist: ein Epoxidharz, ein ungesättigtes Polyesterharz, ein Polyvinylesterharz, ein Phenolharz, ein Guanaminharz, ein Polyimidharz, ein Bismaleimidtriazinharz, ein Furanharz, ein Polyurethanharz, ein Polydiarylphthalatharz, ein Melaminharz, ein Harnstoffharz oder ein Aminoharz.

3. Verfahren nach Anspruch 1, wobei die Fasern mindestens eine unter Glasfasern, Kohlenstoffasern oder anderen synthetischen Fasern ausgewählte Art von Fasern sind.

4. Verfahren nach Anspruch 1, wobei die Fasern Naturfasern sind.

5. Verfahren nach Anspruch 4, wobei die Naturfasern mindestens eine unter Kokosnussfasern, Bambusfasern, Zuckerrohrfasern oder Bananenschalenfasern ausgewählte Art von Fasern sind.

6. Verfahren nach einem der Ansprüche 1 bis 5, wobei die Vielzahl von Einspritzöffnungen mit Hilfe eines Computerprogramms aktiviert werden.

7. Verfahren nach einem der Ansprüche 1 bis 5, das ferner die Wiederholung der Schritte des Einspritzens und der Steuerung mit einer Zykluszeit von 1 bis 5 Minuten umfasst.

8. Verfahren nach einem der Ansprüche 1 bis 5, wobei die Steuerung einen Rückgang von Druck und Temperatur während der Bildung eines Formteils in der Form begrenzt.

9. System für Harztransferformen, RTM, umfassend:
eine Form mit einem Hohlraum;
eine Vielzahl von Einspritzöffnungen, die jeweils in Fluidverbindung zwischen dem Hohlraum und ein Harzvorratsbehälter angeordnet sind, **dadurch gekennzeichnet, dass** es
eine numerische Steuerung umfasst, die vorprogrammiert ist, um die Vielzahl von Einspritzöffnungen zum Einspritzen von Harz aus dem Vorratsbehälter in den Hohlraum zu aktivieren, um das Verfahren nach einem der Ansprüche 1 bis 8 durchzuführen.

## Revendications

1. Procédé de moulage par transfert de résine, RTM, avec injection échelonnée d'une résine,
le procédé comprenant :
l'injection de ladite résine dans une pluralité d'orifices d'injection d'un moule ;
la commande de la température et de la pression appliquées audit moule ; et
dans lequel ladite pluralité d'orifices d'injection sont activés pour l'injection de ladite résine,
**caractérisé en ce que** ladite résine comprend des fibres et lesdits orifices d'injection sont mis en marche sous l'une ou
l'autre configuration :
(a) une première paire opposée (34A et 34B) et alternée avec une seconde paire opposée (34C et 34D), où les paires opposées adjacentes (34A-34B et 34C-34D) injectent de la résine en alternance ; ou,
(b) une première paire croisée (34A-34D) et alternée avec une seconde paire croisée (34B-34C), où les paires croisées adjacentes (34A-34D et 34B-34C) injectent de la résine en alternance.

2. Procédé selon la revendication 1 dans lequel ladite résine est au moins l'une d'une résine époxy, d'une résine de polyester insaturé, d'une résine de polyvinylester, d'une résine phénolique, d'une résine de guanamine, d'une résine de polyimide, d'une résine de bismaléimide triazine, d'une résine de furane, d'une résine de polyuréthane, d'une résine de polydiarylphtalate, d'une résine de mélamine, d'une résine d'urée ou d'une résine amino.

3. Procédé selon la revendication 1 dans lequel lesdites fibres sont au moins l'une de fibres de verre, de carbone ou d'autres fibres synthétiques.

4. Procédé selon la revendication 1 dans lequel lesdites fibres sont des fibres naturelles.

5. Procédé selon la revendication 4 dans lequel lesdites fibres naturelles sont au moins l'une de fibres de noix de coco, de fibres de bambou, de fibres de canne à sucre ou de fibres de peau de banane.

6. Procédé selon l'une quelconque des revendications 1 à 5 dans lequel ladite pluralité d'orifices d'injection sont activés sur la base d'un programme informatique.

7. Procédé selon l'une quelconque des revendications 1 à 5 comprenant en outre la répétition des étapes d'injection et de commande avec un temps de cycle de 1 à 5 minutes.

8. Procédé selon l'une quelconque des revendications 1 à 5 dans lequel la commande limite un déclin de pression et de température pendant la formation d'une pièce moulée dans ledit moule.

9. Système de moulage par transfert de résine, RTM, comprenant :
un moule ayant une cavité ;
une pluralité d'orifices d'injection chacun en communication fluidique entre la cavité et un réservoir de résine ; **caractérisé en ce qu'**il comprend
un dispositif de commande numérique qui est préprogrammé pour activer ladite pluralité d'orifices d'injection pour injecter de la résine à partir dudit réservoir dans la cavité de manière à réaliser le procédé selon l'une quelconque des revendications 1 à 8.
